# EUROPEAN PATENT APPLICATION

(11) **EP 3 185 129 A1**
(43) Date of publication of application: **28.06.2017**
(21) Application number: 15834149.5
(22) Date of filing: 04.08.2015
(51) Int. Cl.: G06F 13/00, H04L 12/58

(54) **COMMUNICATION SYSTEM**

(30) Priority: 18.08.2014 JP 2014165964
(71) Applicant: MITSUBISHI ELECTRIC CORPORATION, Chiyoda-ku Tokyo 100-8310 (JP)
(72) Inventor: MOCHIZUKI, Akifumi, Tokyo 100-0006 (JP)
(74) Representative: Witte, Weller & Partner Patentanwälte mbB
(86) International application number: PCT/JP2015/072064
(87) International publication number: WO 2016/027658

(57) **Abstract**

Provided is a communication system, including: a portable email terminal, which is to be held by an operator and is configured to transmit an email; and a forwarding apparatus configured to receive the email transmitted from the portable email terminal, select a forwarding destination from among a plurality of forwarding destinations set in advance, and forward the received email to the selected forwarding destination, the portable email terminal including: a message input unit configured to input a message; a subject line selection unit for selection of a combination of letters for a subject line from among a plurality of combinations of letters for the subject line set in advance; and an email transmission unit configured to transmit to the forwarding apparatus the email in which an email address of the portable email terminal is set as a transmission source email address, the input message is set as body text, and the selected combination of letters for the subject line is set as the subject line, in which the forwarding apparatus is configured to select the forwarding destination based on the transmission source email address and the subject line of the received email.

## Description

### Technical Field

The present invention relates to a communication system for forwarding an email, which has been transmitted from an email terminal, to a forwarding destination.

### Background Art

Hitherto, there has been known a communication system including: an email terminal; a mail server configured to receive an email transmitted from the email terminal, convert body text of the received email into an image file, and retrieve forwarding destination information contained in the email; a fax server configured to forward the converted image file to a forwarding destination indicated by the retrieved forwarding destination information; and a facsimile terminal configured to output the forwarded image file (for example, refer to Patent Literature 1).

### Citation List

### Patent Literature

[PTL 1] JP 11-154969 A

### Summary of Invention

### Technical Problem

However, when an operator transmits, for example, operation information to a supervisor using an email terminal, the operator needs to input forwarding destination information into the email terminal in advance. Thus, there is a problem in that an error in input of the forwarding destination information causes erroneous transmission.

The present invention provides a communication system capable of suppressing occurrence of erroneous transmission.

### Solution to Problem

According to one embodiment of the present invention, there is provided a communication system, including: a portable email terminal, which is to be held by an operator and is configured to transmit an email; and a forwarding apparatus configured to receive the email transmitted from the portable email terminal, select a forwarding destination from among a plurality of forwarding destinations set in advance, and forward the received email to the selected forwarding destination, the portable email terminal including: a message input unit configured to input a message; a subject line selection unit configured to be operated for selection of a combination of letters for a subject line from among a plurality of combinations of letters for the subject line set in advance; and an email transmission unit configured to transmit to the forwarding apparatus the email in which an email address of the portable email terminal is set as a transmission source email address, the input message is set as body text, and the selected combination of letters for the subject line is set as the subject line, in which the forwarding apparatus is configured to select the forwarding destination based on the transmission source email address and the subject line of the received email.

### Advantageous Effects of Invention

With the communication system according to the one embodiment of the present invention, the operator selects a combination of letters for the subject line, the portable email terminal transmits an email, and the forwarding apparatus forwards the email to the forwarding destination based on the transmission source email address and the subject line of the received email, to thereby achieve suppression of occurrence of erroneous transmission.

### Brief Description of Drawings

FIG. 1 is a configuration diagram for illustrating a communication system according to a first embodiment of the present invention.
FIG. 2 is a block diagram for illustrating a portable email terminal of FIG. 1.
FIG. 3 is a diagram for illustrating a forwarding destination table of a forwarding apparatus of FIG. 1.
FIG. 4 is a diagram for illustrating a registration database table registered in a registration database of FIG. 1.

### Description of Embodiments

### First Embodiment

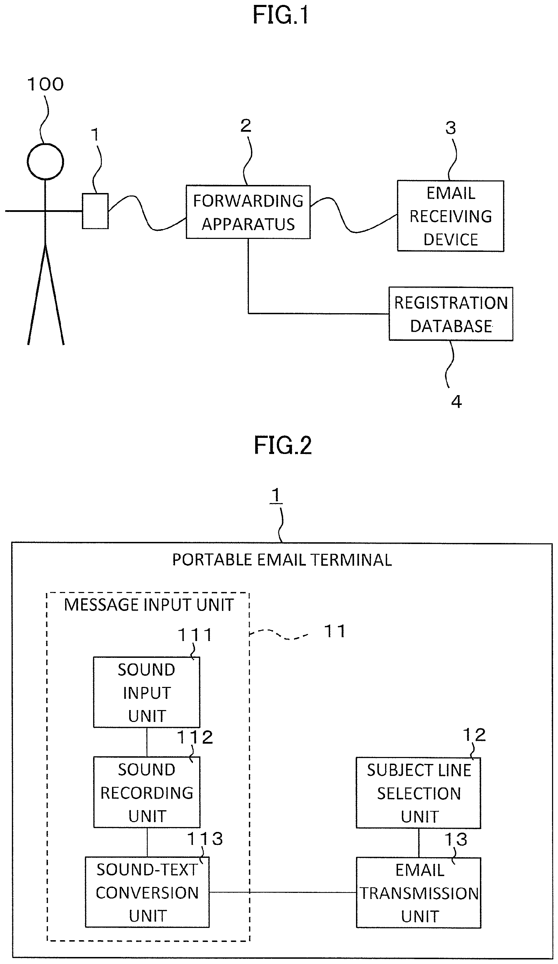

FIG. 1 is a configuration diagram for illustrating a communication system according to a first embodiment of the present invention. In FIG. 1, the communication system includes: a portable email terminal 1 to be held by an operator 100 and configured to transmit an email; a forwarding apparatus 2 configured to receive the email transmitted from the portable email terminal 1, select a forwarding destination from among a plurality of forwarding destinations set in advance, and forward the received email to the selected forwarding destination; a plurality of email receiving devices 3 each configured to receive the forwarded email; and a registration database 4 provided in an information center and connected to the forwarding apparatus 2. In FIG. 1, only one email receiving device 3 is illustrated, but the communication system includes the plurality of email receiving devices 3.

FIG. 2 is a block diagram for illustrating the portable email terminal 1 of FIG. 1. The portable email terminal 1 includes: a message input unit 11 configured to input a message; a subject line selection unit 12 configured to be operated for selection of a combination of letters for a subject line from among a plurality of combinations of letters for the subject line set in advance; and an email transmission unit 13 configured to transmit the email to the forwarding apparatus 2.

The message input unit 11 includes: a sound input unit 111 configured to input sound; a sound recording unit 112 configured to record the sound input to the sound input unit 111; and a sound-text conversion unit 113 configured to convert the sound recorded in the sound recording unit 112 into text. The message input unit 11 is configured to set the text converted by the sound-text conversion unit 113 as a message. The message input unit 11 may not include the sound recording unit 112. In this case, the sound-text conversion unit 113 converts the sound input to the sound input unit 111 into text.

In the subject line selection unit 12, items are set in advance as a plurality of combinations of letters for the subject line. Those items include a call back service (CBS) dispatch, a CBS completion, a regular report, a CBSHELP, an earthquake, an office report, and an accident. The operator operates the subject line selection unit 12 to select one combination of letters for the subject line from among the plurality of combinations of letters. The CBS in this case refers to dispatch of an operator when a customer call is received.

The email transmission unit 13 is configured to transmit an email in which an email address corresponding to the portable email terminal 1 is set as a transmission source email address, the input message is set as body text, and the selected combination of letters for the subject line is set as the subject line. In other words, the email contains the email address of the portable email terminal 1, the input message, and the selected combination of letters for the subject line.

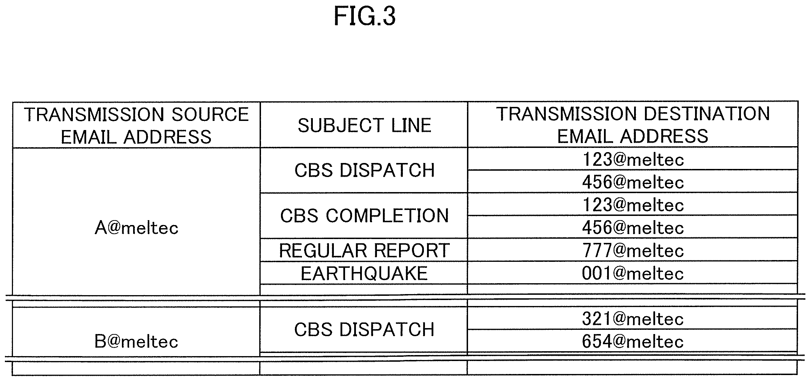

The forwarding apparatus 2 includes a forwarding destination table in which a forwarding destination email address corresponding to the transmission source email address and the subject line of the received email is input in advance. FIG. 3 is a diagram for illustrating the forwarding destination table of the forwarding apparatus 2 of FIG. 1. The number of forwarding destination email addresses may be one or more. The forwarding apparatus 2 uses the transmission source email address and the subject line of the received email, and the forwarding destination table, to set the email address of the forwarding destination. Further, the forwarding apparatus 2 sets as the body text the message described in the body text of the email transmitted from the email transmission unit 13, and sets as the subject line the combination of letters for the subject line described in the subject line of the email transmitted from the email transmission unit 13, to forward the email to the forwarding destination.

Examples of the email receiving device 3 include a personal computer of a supervisor of the operator or a cellular phone of the supervisor of the operator. In other cases, the email receiving device 3 may be, for example, a personal computer of a receiver in the information center or a personal computer of a manager.

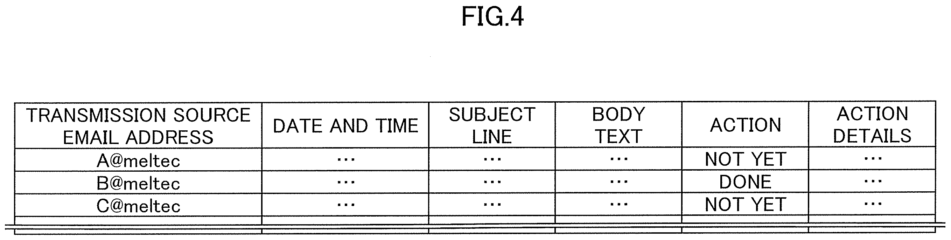

The forwarding apparatus 2 registers the transmission source email address, the subject line, and the body text of the received email, and the date and time at which the email is received with the registration database 4 in association with one another. FIG. 4 is a diagram for illustrating a registration database table registered in the registration database 4 of FIG. 1. In addition to the transmission source email address, the subject line, the body text, and the date and time at which the email is received, whether or not some action is taken and action details are registered with the registration database 4 in association with those items. An administrator managing the registration database 4 inputs whether or not some action is taken and action details using an input device (not shown) provided in the information center.

Next, a description is given of operation of the communication system. First, the operator utters a message to input his or her sound to the portable email terminal 1 held by him or herself (sound input step). The portable email terminal 1, which has input the sound, records the input sound (sound recording step), and then converts the recorded sound into text (sound-text conversion step).

Further, the operator operates the subject line selection unit 12 to select a combination of letters for the subject line from among the plurality of combinations of letters for the subject line (subject line selection step).

After that, the portable email terminal 1 sets the email address of the portable email terminal 1 as the transmission source email address, sets the selected combination of letters for the subject line as the subject line, and sets the message converted into text by the sound-text conversion unit 113 as the body text, to transmit an email to the forwarding apparatus 2 (email transmission step).

After that, the forwarding apparatus 2, which has received the email, uses the transmission source email address and the subject line of the received email, and the forwarding destination table, to set the forwarding destination email address. Further, the forwarding apparatus 2 sets as the body text the message described in the body text of the email transmitted from the email transmission unit 13, and sets as the subject line the combination of letters for the subject line described in the subject line of the email transmitted from the email transmission unit 13, to forward the email to the forwarding destination (forwarding step). The operation of the communication system thus comes to an end.

As described above, with the communication system according to the first embodiment of the present invention, the operator selects a combination of letters for the subject line, the portable email terminal 1 transmits the email, and the forwarding apparatus 2 forwards the email to the forwarding destination based on the transmission source email address and the subject line of the received email, to thereby achieve suppression of occurrence of erroneous transmission. Further, according to the communication system, a time frame for communication is not restricted compared to a case in which the operator uses a phone to deliver a message to a recipient. In other words, even when the recipient at the information center is taking a call, it is possible to deliver a message to the recipient. Further, according to the communication system, a message no longer needs to be delivered by phone, and information can be exchanged by email in a unified manner.

Further, the message input unit 11 includes the sound input unit 111 configured to input sound, and the sound-text conversion unit 113 configured to convert the sound input to the sound input unit 111 into text, and the text converted by the sound-text conversion unit 113 is set as the message, to thereby enable the operator to input a message more rapidly and easily compared to a case in which the operator operates a keyboard to input the message.

Further, the communication system includes the registration database 4 connected to the forwarding apparatus 2, and the forwarding apparatus 2 registers the transmission source email address, the subject line, and the body text of the received email, and the date and time at which the email is received with the registration database 4 in association with one another. Therefore, it is possible to register a registration matter more rapidly and accurately compared to a case in which the administrator managing the registration database 4 operates a keyboard to register the registration matter.

In the first embodiment, a description has been given of an example in which the forwarding apparatus 2 is configured only to forward an email to the forwarding destination, but the forwarding apparatus 2 may further be configured to confirm whether or not the portable email terminal 1 has received a reply from the forwarding destination. In this case, the combination of letters for the subject line set in advance in the subject line selection unit 12 contains letters indicating that sending a reply is obligatory, such as "reply requested". Further, the forwarding apparatus 2 includes a reply-response check database indicating whether or not a reply has been sent, and when the portable email terminal 1 receives a reply from the forwarding destination that has received an email designated "reply requested", the forwarding apparatus 2 registers with the reply-response check database the fact that the email is already replied to. The forwarding destination sends a reply to the portable email terminal 1 via the forwarding apparatus2. In other cases, the forwarding destination may send a reply to the portable email terminal 1 without the intermediation of the forwarding apparatus 2. In this case, information indicating that a reply has been sent is transmitted from the forwarding destination or the portable email terminal 1.

## Claims

1. A communication system, comprising:
a portable email terminal, which is to be held by an operator and is configured to transmit an email; and
a forwarding apparatus configured to receive the email transmitted from the portable email terminal, select a forwarding destination from among a plurality of forwarding destinations set in advance, and forward the received email to the selected forwarding destination,
the portable email terminal comprising:
a message input unit configured to input a message;
a subject line selection unit configured to be operated for selection of a combination of letters for a subject line from among a plurality of combinations of letters for the subject line set in advance; and
an email transmission unit configured to transmit to the forwarding apparatus the email in which an email address of the portable email terminal is set as a transmission source email address, the input message is set as body text, and the selected combination of letters for the subject line is set as the subject line,
wherein the forwarding apparatus is configured to select the forwarding destination based on the transmission source email address and the subject line of the received email.

2. A communication system according to claim 1,
wherein the message input unit comprises:
a sound input unit configured to input sound; and
a sound-text conversion unit configured to convert the sound input to the sound input unit into text, and
wherein the text converted by the sound-text conversion unit is set as the message.

3. A communication system according to claim 1 or 2, further comprising a registration database to be connected to the forwarding apparatus,
wherein the forwarding apparatus is configured to register the transmission source email address, the body text, and the subject line of the received email, and a date and time at which the email is received, with the registration database in association with one another.
